# EUROPEAN PATENT SPECIFICATION

(11) **EP 2 899 626 B1**
(45) Date of publication and mention of the grant of the patent: **25.05.2022**
(21) Application number: 15152142.4
(22) Date of filing: 22.01.2015
(51) Int. Cl.: G06F 3/06

(54) **Method and system for service-aware data placement in a storage system**
Verfahren und System für dienstbewusste Datenplatzierung in einem Speichersystem
Procédé et système de placement de données avec notification des services dans un système de stockage

(30) Priority: 23.01.2014 US 201414162310
(43) Date of publication of application: 29.07.2015
(73) Proprietor: EMC IP Holding Company LLC, Hopkinton, MA 01748 (US)
(72) Inventor: Bonwick, Jeffrey S., Menlo Park, CA 94025 (US)
(74) Representative: Sharman, Thomas Alexander

(56) References cited:
- US-A- 5 488 701
- US-A- 6 052 759
- US-A1- 2007 143 541
- US-A1- 2013 173 955

## Description

### BACKGROUND

In order to protect against potential loss of data in a storage system, it is often advantageous to implement a replication scheme. Current replication schemes do not take hardware service schedules of the storage system into account when writing data and parity values.

US5488701A discloses a log structured array (LSA) storage subsystem, and method for recovering from a storage device failure which incorporates the LSA write and garbage collection procedures, thereby simplifying the recovery process and eliminating the need for dedicated or distributed sparing schemes. Data is distributed across the array in N+P parity groups. Upon a device failure, each lost data block is reconstructed from the remaining blocks of its parity group. The reconstructed block is then placed in the subsystem write buffer to be processed with incoming write data, and new parity is generated for the remaining N-1 data blocks of the group. A lost parity block is replaced by first moving one of the data blocks of its parity group to the write buffer, and then generating new parity for the remaining N-1 data blocks. Also disclosed is a storage subsystem implementing the preceding recovery method.

US2013/173955A1 discloses a disk array memory system which comprises: a plurality of disks in a disk array for storage of content data and parity data in stripes, content data in a same stripe sharing parity bits of said parity data, each disk having a spare disk capacity including at least some of a predefined array spare capacity, said array spare capacity providing a dynamic space reserve over said array to permit data recovery following a disk failure event; a cache for caching content data prior to writing to said disk array; and a controller configured to select a stripe currently having a largest spare stripe capacity, for a current write operation of data from said cache, thereby to write all said data of said current write operation on a same stripe, thereby to maximize sharing of parity bits per write operation and minimize separate parity write operations.

USUS6052759A teaches A Redundant Array of Independent Disks (RAID) system that is adaptable to host Input/Output traffic, wherein the RAID configuration is hidden from the host computer, and wherein the system uses various methods for striping and organizing data across the array when disks are added or removed. The system dynamically determines the RAID configuration used to store host data. To maximize response time and avoid a write penalty, small write operations are mapped into RAID 1 configurations, and medium and large write operations are mapped into RAID 3 configurations. The data are migrated into RAID 5 configurations as a background operation, to minimize the disk space lost. The system hides configuration changes necessary for the addition and/or removal of disks to/from the disk array by unstriping data, adding or deleting (removing) a disk and then restriping data over all the disks. The methods may include steps of dividing data blocks into a plurality of square portions, and exchanging data in sets of blocks of each of the square portions, with the exchanging step including locating a diagonal set of blocks within a selected square portion, and exchanging all sets of blocks equidistant from the diagonal, on opposite sides of the diagonal, and in a line perpendicular to the diagonal. While these changes are in progress, the disk array remains on-line and most host data is available for access and modification.

US2007143541A1 teaches methods and structure for improved migration of a RAID logical volume from a higher level RAID management to a lower level. Features and aspects hereof provide for migrating a RAID logical volume by removal of one or more disk drives from the logical volume and moving or regenerating only the information of the removed drive(s) that is required for the lower level of RAID storage management. In one exemplary embodiment, a RAID 6 volume may be migrated to a RAID 5 volume by removing a single disk drive of the volume. Minimal movement of remaining data blocks and RAID 5 parity blocks in each stripe may be performed creating new RAID 5 stripes devoid of RAID 6 second redundancy blocks. The newly formed RAID 5 volume may then be mapped according to modified mapping algorithms to reduce the need for further data movement.

### SUMMARY

The invention is set out in the independent claims to which reference should be made.

Preferable features are set out in the dependent claims.

### BRIEF DESCRIPTION OF DRAWINGS

FIG. 1 shows a system in accordance with one embodiment of the invention.
FIG. 2 shows RAID stripes in accordance with one or more embodiments of the invention.
FIG. 3 shows data structures in accordance with one embodiment of the invention
FIG. 4 shows a flowchart implementing a RAID write operation in accordance with one or more embodiments not falling within the scope of the claims.
FIG. 5 shows a flowchart for implementing service-aware data placement in accordance with one or more embodiments of the invention.
FIG. 6 shows a flowchart for the implementing the modified RAID write operation in accordance with one or more embodiments of the invention.
FIGS. 7A-7B shows a flowchart for implementing a modified garbage collection operation in accordance with one or more embodiments of the invention.
FIGS. 8A-8B show an example in accordance with one or more embodiments of the invention.

### DETAILED DESCRIPTION

Specific embodiments of the invention will now be described in detail with reference to the accompanying figures. In the following detailed description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

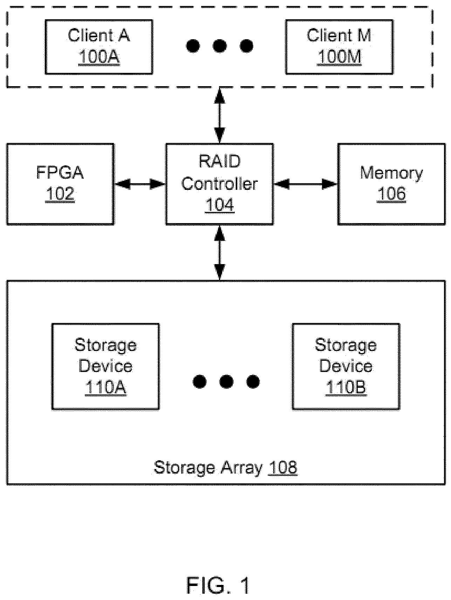

In the following description of FIGS. 1-8B, any component described with regard to a figure, in various embodiments of the invention, may be equivalent to one or more like-named components described with regard to any other figure. For brevity, descriptions of these components will not be repeated with regard to each figure. Thus, each and every embodiment of the components of each figure is incorporated by reference and assumed to be optionally present within every other figure having one or more like-named components. Additionally, in accordance with various embodiments of the invention, any description of the components of a figure is to be interpreted as an optional embodiment which may be implemented in addition to, in conjunction with, or in place of the embodiments described with regard to a corresponding like-named component in any other figure.

In general, embodiments of the invention relate to storing data in a storage array using a RAID scheme. More specifically, the RAID scheme uses information about storage devices that are to be removed and/or replaced when determining RAID stripe geometry for new and live RAID stripes.

For purposes of this invention, the term "RAID" as used herein refers to "Redundant Array of Independent Disks." While "RAID" refers to any array of independent disks, embodiments of the invention may be implemented using any type of persistent storage device.

FIG. 1 shows a system in accordance with one embodiment of the invention. As shown in FIG. 1, the system includes one or more clients (100A, 100M), a RAID controller (104) also called herein "storage controller", memory (106), optionally a Field Programmable Gate Array (FPGA) (102), and a storage array (108).

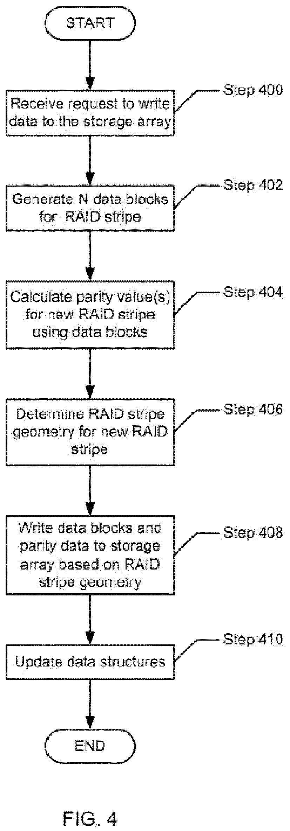

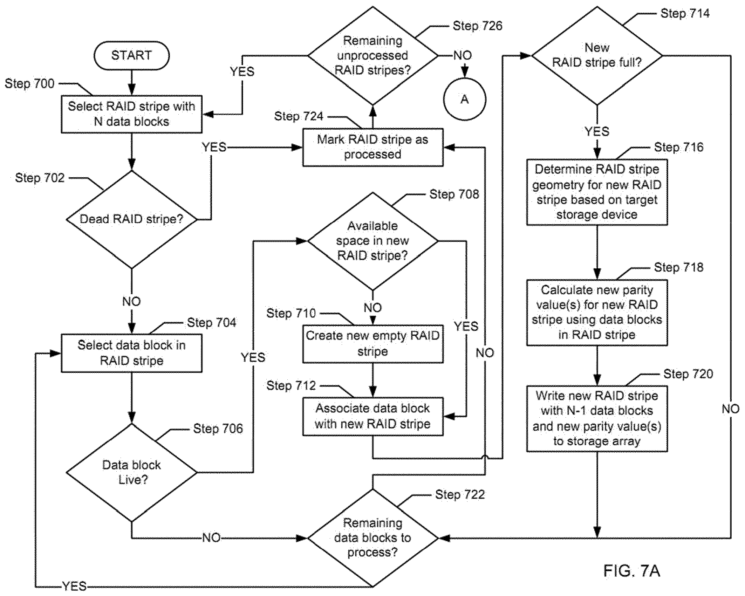

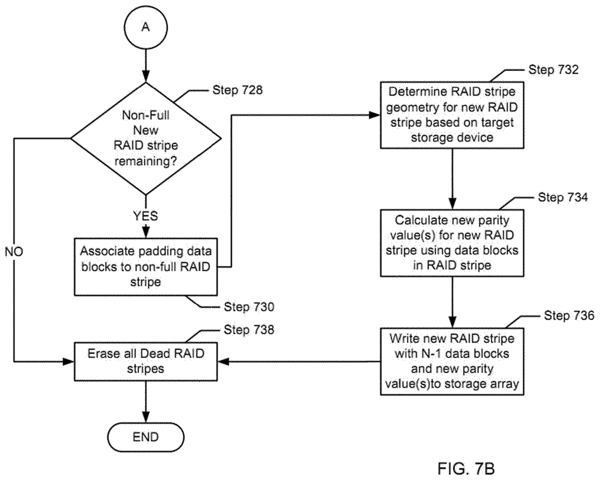

In one embodiment of the invention, a client (100A, 100M) is any system or process executing on a system that includes functionality to issue a read request or a write request to the RAID controller (104). In one embodiment of the invention, the clients (100A, 100M) may each include a processor (not shown), memory (not shown), and persistent storage (not shown). In one embodiment of the invention, the RAID controller (104) is configured to implement a RAID scheme, which includes writing data to the storage array (108) in a manner consistent with embodiments described in FIGS. 4-7, and performing garbage collection operations in accordance with embodiments described in FIG. 7. Further, the RAID controller includes functionality to read data (including reconstructing data) from the storage array (108). In one embodiment of the invention, the RAID controller (104) includes a processor configured to execute instructions to implement one or more embodiments of the invention and / or execute steps of at least one method disclosed herein, where the instructions are stored on a non-transitory computer readable medium (not shown) that is located within or that is operatively connected to the RAID controller (104). Alternatively, the RAID controller (104) may be implemented using hardware. Those skilled in the art will appreciate that the RAID controller (104) may be implemented using any combination of software and/or hardware.

In one embodiment of the invention, the RAID controller (104) is operatively connected to memory (106). The memory (106) may be any volatile memory including, but not limited to, Dynamic Random-Access Memory (DRAM), Synchronous DRAM, SDR SDRAM, and DDR SDRAM. In one embodiment of the invention, the memory (106) is configured to temporarily store various data (including parity data) prior to such data being stored in the storage array.

In one embodiment of the invention, the FPGA (102) (if present) is configured to calculate a parity value for at least one parity blocks in any RAID stripe. The FPGA (102) includes functionality to calculate parity values *(e.g.,* P parity value, Q parity value) for purposes of storing data in the storage array (108) and/or functionality to perform various calculations necessary to recover corrupted data stored using the RAID scheme. The RAID controller (104) may use the FPGA (102) to offload the processing of various data in accordance with one or more embodiments of the invention.

In one embodiment of the invention, the storage array (108) includes one or more storage devices (SDDs) (110A, 110B). Each storage device includes persistent storage media. Examples of storage devices include, but are not limited to, magnetic memory devices, optical memory devices, phase change memory devices, solid state memory devices, tape drives, any other suitable type of persistent memory device, or any combination thereof. In one embodiment of the invention, each of the plurality of SDs comprises NAND flash.

Those skilled in the art will appreciate that while FIG. 1 shows an FPGA, the invention may be implemented without an FPGA. Further, those skilled in the art will appreciate that other components may be used in place of the FPGA without departing from the invention. For example, the invention may be implemented using an Application Specific Integrated Circuit(s) (ASIC), a graphics processing unit(s) (GPU), a general purpose processor(s), any other hardware device capable of calculating parity values for purposes of storing data in the storage array and/or performing various calculations necessary to recover corrupted data stored using the RAID scheme, any devices that include a combination of hardware, firmware, and/or software configured to calculate parity values for purposes of storing data in the storage array (108) and/or to perform various calculations necessary to recover corrupted data stored using the RAID scheme, or any combination thereof

Those skilled in the art will appreciate that the invention is not limited to the configuration shown in FIG. 1.

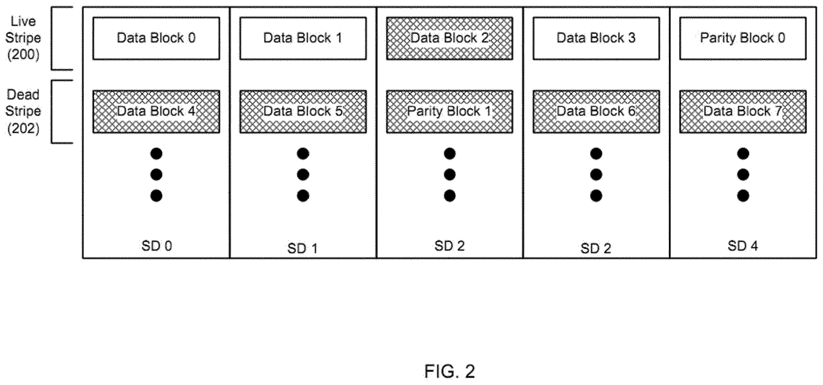

FIG. 2 shows RAID stripes in accordance with one or more embodiments of the invention. Each RAID stripe includes data blocks and parity blocks. A data block corresponds to a portion of a RAID stripe that is located on a storage device that includes data (as opposed to parity values). A parity block corresponds to a portion of the RAID stripe that is located on a storage device that includes a parity value (or one of the parity values) for the RAID stripe. Each RAID stripe includes data blocks and one or more parity blocks.

In one embodiment of the invention, each block *(i.e.,* data blocks and parity blocks) may be a dead block or a live block. A dead block is a block that includes stale data or data that is otherwise marked to be erased. Data may be considered stale when an updated copy of the data is stored in another live block in the storage array. The data in the dead block is not used to service read requests. In one embodiment of the invention, a live block is a block that includes at least some data that is actively being used by clients and/or the storage controller. The data in the live block is used to service read requests.

Each RAID stripe in the system is either a live stripe (200) or a dead stripe (202). A RAID stripe is a dead stripe if it only includes dead blocks (e.g., data blocks 4-7 and parity block 1). A RAID stripe in the storage array is a live stripe (200) if it includes at least one live block.

As shown in FIG. 2, the RAID stripes (200, 202) include data blocks and parity blocks. The number of data blocks and parity blocks may vary based upon the RAID scheme used to generate the RAID stripes. For example, if the RAID stripe is generated in accordance with RAID-5, then the RAID stripe may include four data blocks and one parity block. In another example, if the RAID stripe is generated in accordance with RAID-6, then the RAID stripe may include four data blocks and two parity blocks *(e.g.,* a parity block with a P parity value and a second parity block with a Q parity value). RAID stripes in the storage array may all be implemented using the same parity scheme. Alternatively, RAID stripes in the storage array may be implemented using different RAID schemes.

In one embodiment of the invention, the P parity value is a Reed-Solomon syndrome that is generated using a P parity function. The P Parity function may correspond to any function that can generate a Reed-Solomon syndrome. In one embodiment of the invention, the P parity function is an XOR function.

In one embodiment of the invention, the Q parity value is a Reed-Solomon syndrome that is generated using a Q parity function. The Q Parity function may correspond to any function that can generate a Reed-Solomon syndrome. In one embodiment of the invention, a Q parity value is a Reed-Solomon code. In one embodiment of the invention, Q = *g*⁰ · D₀ + *g*¹ · D₁ + *g*² · D₂ + ...+ *g*^{*n*-1} · Dₙ₋₁, where Q corresponds to any one of the Q parity values described in the invention, g is a generator of the field, and the value of D corresponds to the data (stored in the data blocks in the corresponding RAID stripe).

In one embodiment of the invention, the RAID stripe geometry defines the location of each of the blocks in a RAID stripe. For example, referring to live stripe (200), the RAID geometry may specify the following: (i) RAID scheme - RAID 5, and (ii) that the parity block is located on SD 4. Similarly, for the dead stripe (202), the RAID geometry may specify the following: (i) RAID scheme - RAID 5 and (ii) that the parity block is located on SD 2. Depending on the specific implementation of the SD, the RAID stripe geometry may also include the location of the specific block(s) within the SD that correspond to the parity block(s).

Using this information the storage controller (or another component in the system) may determine the location of the data blocks in the storage array for the live stripe (200) and dead stripe (202). The stripe geometry may include additional information (e.g., data block locations) and/or other information without departing from the scope of the claims.

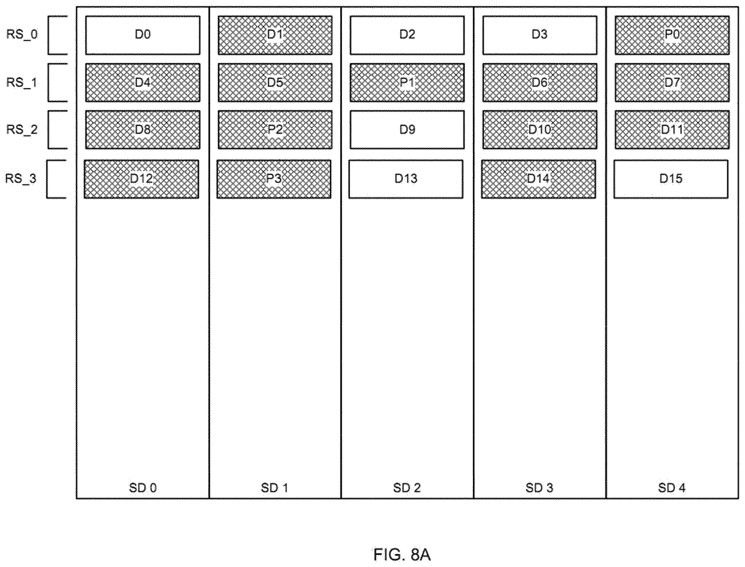

In one embodiment of the invention, each block in the RAID stripe is located on a different SD. Further, the width of each RAID stripe in the storage array may be the same and span the entire storage array *(e.g.,* 5 SDs in FIG. 2). In another embodiment of the invention, the RAID stripe may not span the entire storage array (*see e.g.,* FIGs. 8A-8B)

Embodiments of the invention may be implemented using different RAID schemes (e.g., RAID-4, RAID-5, RAID-6, multi-dimensional RAID, etc.) and different stripe widths without departing from the scope of the claims. Further, a given storage array may concurrently have stored therein RAID stripes of different widths stored using different RAID schemes.

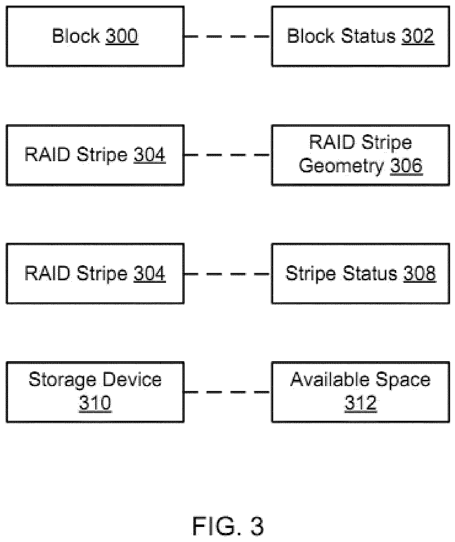

FIG. 3 shows data structures in accordance with one embodiment of the invention. In one embodiment of the invention, the RAID controller includes one or more data structures to implement embodiments of the invention.

In one embodiment of the invention, a block status (302) is maintained for each block (300) in the storage array. The block status (302) indicates whether the block is a live block or a dead block. In one embodiment of the invention, a RAID stripe geometry (306) is maintained for each RAID stripe (304) stored in the storage array. Further, a stripe status (308), which indicates whether the RAID stripe (304) is a live stripe or a dead stripe, is maintained for each RAID stripe (304). In addition, the RAID controller may also track available space (312) in each storage device (310). The available space denotes how much of the storage device is available to store blocks (data or parity). The available space may include (i) currently unused space and/or (ii) space that is currently being used but that may be overwritten with new blocks (data or parity).

Turning to the flowcharts, while the various steps in the flowchart are presented and described sequentially, one of ordinary skill will appreciate that some or all of the steps may be executed in different orders, some steps may be combined or omitted, and some or all of the steps may be executed in parallel. In one embodiment of the invention, one or more steps shown in FIGS. 4-7B may be performed in parallel with one or more of the other steps shown in FIGS. 4-7B.

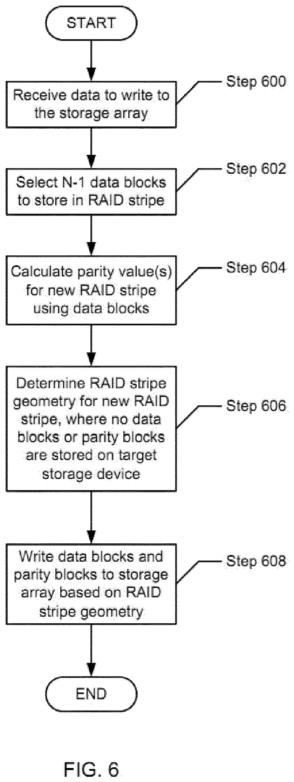

FIG. 4 shows a flowchart implementing a RAID write operation in accordance with one or more embodiments not falling within the scope of the claims. More specifically, FIG. 4 shows normal RAID write operations prior to a target SD being identified (see FIG. 6).

In Step 400, a request to write data to the storage array is received. The request may include the data to be stored or may include a reference to the data to be stored. The request may take any form without departing from the invention. In Step 402, N data blocks are generated to store in a RAID stripe (see e.g., FIG. 2). A data block corresponds to a portion of the data that is to be stored in the storage array. The number of data blocks for the RAID stripe is based on the RAID scheme upon which the RAID stripe is based. In Step 404, one or more parity values for the new RAID stripe are calculated using the data blocks. The number of parity values depends on the RAID scheme upon which the RAID stripe is based. For example, if the RAID stripe is generated based on RAID-6, then there are two parity values calculated: P parity value and a Q parity value. The result of Step 404 is a set of parity blocks. In Step 406, the RAID stripe geometry (see FIG. 2) is determined for the RAID stripe. The RAID stripe geometry may correspond to any RAID stripe geometry. Specifically, the parity value(s) may be placed on any SD in the storage array.

In Step 408, the data blocks and parity blocks are written to the storage array as a RAID stripe in accordance with the RAID stripe geometry (determined in Step 406). In Step 410, the data structures (e.g., the data structures in FIG. 3) are updated to reflect that the new RAID stripe has been written to the storage array. For example, Step 410 may include (i) storing the RAID stripe geometry for the new RAID stripe and (ii) updating the amount of available space in each of the storage devices to which at least one block in the new RAID stripe was written.

Concurrently with the execution of the process shown in FIG. 4, the storage controller may also be performing garbage collection operations. In general, garbage collection operations include (i) identifying live RAID stripes that have zero or more dead data blocks, (ii) generating new RAID stripes using live data blocks from the RAID stripe identified in (i), (iii) writing the new RAID stripes to available locations in the storage array, and (iv) erasing or otherwise reclaiming all locations in the storage array that include dead RAID stripes or RAID stripes identified in (i).

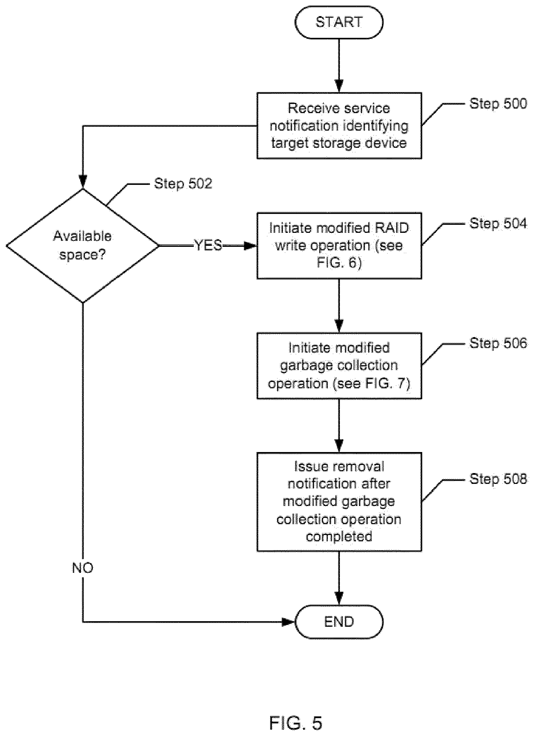

FIGS. 5-7B show flowcharts directed to the operation of the storage controller after a target SD is identified.

Turning to FIG. 5, FIG. 5 shows a flowchart for implementing service-aware parity placement in accordance with one or more embodiments of the invention. In Step 500, a service notification request identifying a target SD is received. The target SD corresponds to an SD in the storage array that (i) is scheduled to be replaced based on an SD service schedule (*e.g.,* each SD is replaced after they have been in service for a certain period of time), (ii) is to be replaced based upon input from a user (*e.g.,* system administrator), or (iii) is experiencing error events (*e.g.,* failed write operations, failed read operations, etc.) that are above an error event threshold. The error event threshold may be set based upon (a) user input, (b) default values, and/or (c) historical information about the storage array and/or the SD. The service notification may be issued and/or received by the storage controller based on items (i), (ii) and/or (iii) listed above. Alternatively, the storage controller may perform the remainder of the steps based on items (i), (ii) and/or (iii) listed above without receiving a service notification. In another embodiment of the invention, one process (or set of processes) executing in the storage controller may, based on items (i), (ii) and/or (iii), generate a service notification, which is then received by the process (or set of processes) in the storage controller executing the steps in FIG. 5.

In Step 502, a determination is made about whether there is available space in the storage array to perform the remaining steps in FIG. 5. This determination made be made using the data structures in FIG. 3. Specifically, if the RAID stripe includes N data blocks, then in order for there to be sufficient available space to perform the remaining steps in FIG. 5, there must be sufficient space in the storage array to store the N data blocks N-1 storage devices. For example, consider the scenario in which there are two RAID stripes in the storage array with five storage devices implementing RAID-5, where each RAID stripe includes four data blocks and one parity block. Accordingly, there are two blocks (data or parity) on each of the five storage devices. In order to determine whether there is enough available space, each storage device (other than the target storage device) must have sufficient space to store three blocks (either data or parity). If there is sufficient available space, the process proceeds to Step 504; otherwise the process ends.

In Step 504, the modified RAID operation is initiated (see FIG. 6). The modified RAID operation is only performed when a write request is received between Step 500 (or after the target SD is identified) and the issuance of the removal notification in Step 508. In Step 506, the modified garbage collection operation is performed (see FIG. 7A-7B). In one embodiment not falling within the scope of the claims, the modified garbage collection operation is always performed while the modified RAID operation is only performed when a write request is received. As such, if no write requests are received between steps 500 and the completion of the modified garbage collection operation, then step 504 is not performed. As discussed above, steps 504 and 506 may be performed concurrently. In Step 508, once the modified garbage collection operation is completed, the storage controller (or a process executing thereon) may issue a removal notification indicating that the target SD may be physically removed from the storage array. After step 508, the storage controller services write requests in accordance with FIG. 4 and performs garbage collection operations (and not the modified garbage collection operation) as described above until another target SD is identified.

FIG. 6 shows a flowchart for the implementing the modified RAID write operation in accordance with one or more embodiments of the invention.

In Step 600, a request to write data to the storage array is received. The request may include the data to be stored or may include a reference to the data to be stored. The request may take any form without departing from the scope of the claims. In Step 602, data blocks are generated to store in the RAID stripe (see e.g., FIG. 2). A data block corresponds to a portion of the data that is to be stored in the storage array. With respect to Step 602, the number of data blocks is based on the number of data blocks that are in the RAID stripe. If the storage array includes N storage devices, the maximum number of blocks (data blocks + parity blocks) in the RAID stripe is N-1. Further, if there are X parity blocks in the RAID stripe, then the maximum number of data blocks in the RAID stripe is N-1-X. For example, if there are five storage devices in the storage array and there is one parity block in the RAID stripe, then the maximum number of data blocks in the RAID stripe is 5-1-1=3.

In Step 604, one or more parity values for the new RAID stripe are calculated using the data blocks. The number of parity values depends on the RAID scheme upon which the RAID stripe is based. For example, if the RAID stripe is generated based on RAID-6, then there are two parity values calculated: P parity value and a Q parity value. The result of Step 604 is one or more parity blocks. In Step 606, the RAID stripe geometry (see FIG. 2) is determined for the new RAID stripe. The RAID stripe geometry may correspond to any RAID stripe geometry that does not place any data blocks or parity blocks on the target SD. Continuing with the discussion of FIG. 6, in Step 608, the data blocks and parity blocks are written as a RAID stripe to the storage array in accordance with the RAID stripe geometry (determined in Step 606).

FIGS. 7A-7B shows a flowchart for implementing a modified garbage collection operation in accordance with one or more embodiments of the invention. In Step 700, a RAID stripe is selected. The RAID stripe may be any RAID stripe in the storage array that is present at the time the modified garbage collection operation is initiated. The process described in FIG. 7A-7B is not performed on RAID stripes that are written to the storage array (as part of the modified garbage collection operation or as part of the modified RAID write operation (see FIG. 6)) after the modified garbage collection operation is initiated. The RAID stripe selected in Step 700 includes N data blocks.

In Step 702, a determination is made about whether the selected RAID stripe is a dead stripe. If the selected RAID stripe is a dead stripe, then the process proceeds to step 724; otherwise, the process proceeds to step 704. In Step 704, a data block in the RAID stripe is selected. In Step 706, a determination is made about whether the selected data block is live. If the selected data block is live, the process proceeds to Step 708; otherwise, the process proceeds to Step 722.

In Step 708, a determination is made about whether there is space available to store the selected data block in the new RAID stripe. Said another way, a determination is made about whether there is a new RAID stripe that is currently being filled with data blocks as part of the modified garbage collection operation (*see e.g.,* FIG. 8A-8B). If there is space available to store the selected data block in the new RAID stripe, the process proceeds to Step 712; otherwise, the process proceeds to Step 710. In one embodiment of the invention, the new RAID stripe is not full if there is less than N-1 data blocks associated with the new RAID stripe, where the RAID stripe (when full) includes N-1 data blocks and M parity blocks (where *e.g.,* N ≥ 4 and M ≥ 1).

In Step 710, when there is no space available to store the selected data block in the new RAID stripe, a new RAID stripe is created. In one embodiment of the invention, at the time the new RAID stripe is created, the RAID stripe does not include any data blocks or parity blocks. In Step 712, the data block (selected in Step 704) is associated with a new RAID stripe (*i.e.,* the empty new RAID stripe created in Step 710 or another new RAID stripe that includes at least one other data block and is not full at the time Step 708 is performed).

In Step 714, a determination is made about whether the new RAID stripe is full *(i.e.,* is the new RAID stripe associated with N-1 data blocks). If the new RAID stripe is full, the process proceeds to Step 716; otherwise, the process proceeds to Step 722.

In Step 716, a new RAID stripe geometry is generated for the selected RAID stripe in which none of the blocks in the RAID stripe are to be stored on the target SD. In Step 718, a new parity value(s) is calculated for the parity block(s) using the data blocks associated with the new RAID stripe. In Step 720, the data blocks and the parity block(s) (which include the parity value(s)) are written as a RAID stripe (with N-1 data blocks) in the storage array in accordance with the RAID stripe geometry determined in Step 716. The process then proceeds to Step 722.

In Step 722, a determination is made about whether there are additional data blocks remaining to process in the selected RAID stripe. If there are additional data blocks remaining to process in the selected RAID stripe, the process proceeds to Step 704; otherwise, the process proceeds to Step 724.

In Step 724, the RAID stripe (selected in Step 700) is marked as processed. In Step 726, a determination is made about whether there are remaining RAID stripes to process in the storage array. If there are remaining RAID stripes to process in the storage array, the process proceeds step 700; otherwise, the process proceeds to Step 728.

In Step 728, a determination is made about whether there are any non-full new RAID stripes remaining. Said another way, a determination is made about whether there is a non-full RAID stripe that includes data blocks that need to be stored in the storage array. If there are any non-full new RAID stripes remaining, the process proceeds to Step 730; otherwise, the process proceeds to Step 738.

In Step 730, one or more padding data blocks are associated with the RAID Stripe (identified in Step 728) in order to have a total of N-1 data blocks associated with the RAID stripe. Padding data blocks are data blocks that include, e.g., blocks that include all zeros or all ones, so as to not impact the parity value(s) generated using the non-padding data blocks in the RAID stripe.

In Step 732, a new RAID stripe geometry is determined for the selected RAID stripe in which none of the blocks in the RAID stripe are to be stored on the target SD. In Step 734, a new parity value(s) is calculated for the parity block(s) using the data blocks associated with the new RAID stripe. In Step 736, the data blocks and the parity block(s) (which include the parity value(s)) are written as a RAID stripe (that includes N-1 data blocks) in the storage array in accordance with the RAID stripe geometry determined in Step 732. The process then proceeds to Step 738.

In Step 738, all RAID stripes that existed in the storage array prior to the initiation of the modified garbage collection operation have been processed and, accordingly, all processed RAID stripes are erased. Once all processed RAID stripes are erased, a removal notification may be issued, which indicates that the target SD may be removed. The removal notification may be sent to a user *(e.g.,* a system administrator) indicating that the target SD may be removed from the storage array. Though not required, all dead blocks may also be erased when the processed RAID stripes are being erased.

In one embodiment of the invention, the result of the process in FIG. 7A-7B results in a set of new RAID stripes in which none of blocks (data or parity) associated with the new RAID stripe are located on the target SD.

FIGS. 8A-8B show an example in accordance with one or more embodiments of the invention. The example is not intended to limit the scope of the claims.

Turning to FIG. 8A, consider a scenario in which the storage array has five storage devices (SD0-SD4) and that a service notification has been received which indicates that SD2 needs to be removed. FIG. 8A shows the state of the storage array at the time the modified garbage collection operation is initiated.

At this stage, the storage controller initiates the modified garbage collection operation as described in FIG. 7A-7B. Specifically, referring to FIG. 8A, RAID Stripe RS_0 through RAID Stripe RS_3 each include four data blocks and one parity block. More specifically, RAID Stripe RS_0 is a live RAID stripe and includes live data blocks D0, D2, and D3. RAID Stripe RS_1 is a dead stripe. RAID Stripe RS_2 is a live RAID stripe that includes live data block D9. Finally, RAID Stripe RS_3 is a live RAID stripe that includes live data blocks D13 and D15.

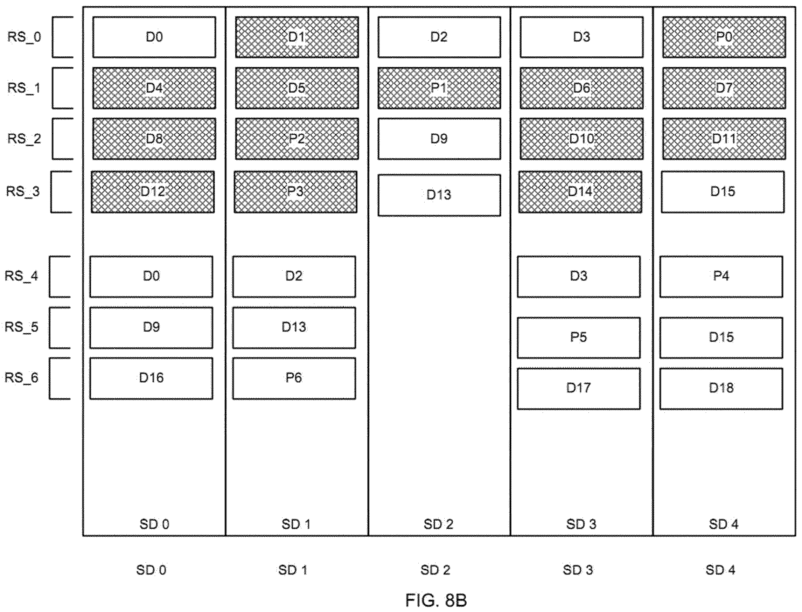

RS_0 through RAID Stripe RS_3 are processed in accordance with FIGS. 7A-7B. Specifically, the live data blocks D0, D2, and D3 are combined to form a new RAID stripe RS_4. (See FIG. 8B). Further, live data blocks D9, D13 and D15 are combined to form a new RAID stripe RS_5. As shown in FIG. 8B, the new RAID stripes (RS_4 and RS_5) have three data blocks (instead of four data blocks). With respect to RAID Stripe RS_1, no data blocks in RAID Stripe RS_1 are rewritten in any of the new RAID stripes as all data blocks in RS_1 are dead.

In this example while the modified garbage collection operation is being performed (*i.e*., after RAID Stripe RS_4 and RAID Stripe RS_5 have been written to the storage array but prior to the RAID Stripe RS_0 through RAID Stripe RS_3 being erased), the storage controller (not shown) receives a request to write new data as a RAID stripe to the storage array. The new data is written to the storage array in accordance with FIG. 6 (Step 606), where the RAID stripe geometry specifies that the parity block (P6) is to be located on SD1. RAID Stripe RS_6 is subsequently written to the storage array.

At this stage, all RAID stripes that existed in the storage array at the time the modified garbage collection operation was initiated have been processed. Accordingly, referring to FIG. 8B, all processed RAID stripes *(i.e.,* RAID Stripes RS_0- RS_3) may be erased and SD 2 may subsequently be removed. SD 2 may be removed prior to the dead blocks being erased without departing from the scope of the claims.

Those skilled in the art will appreciate that while the invention has been described with respect to a single dimension RAID scheme, embodiments of the invention, may be extended to any multi-dimensional RAID scheme. For example, embodiments of the invention may be extended to the multi-dimensional RAID scheme described in U.S. Patent No. 8,316,260.

In one or more embodiments of the invention, after the methods shown in FIGS. 5-7B have been performed the RAID stripes that remain after the target SD has been removed have the same number of parity blocks as the RAID stripes that were present prior to the initiation of FIGS. 5-7A but each have one fewer data blocks per RAID stripe. Once the modified garbage collection process is complete, new RAID stripes written to the storage array may include the same number of data blocks as RAID stripes included prior to the initiation of the modified garbage collection operation. Further, RAID stripes may be written across all SDs. Said another way, after the completion of FIG. 5, subsequently received data may be written to the storage array in RAID stripes that include N data blocks (as compared with the N-1 data blocks in RAID stripes generated during the performance of FIG. 5).

One or more embodiments of the invention may be implemented using instructions executed by one or more processors in the system. Further, such instructions may correspond to computer readable instructions that are stored on one or more non-transitory computer readable mediums. The computer readable instructions stored on the non-transitory computer readable medium(s) comprise instructions which, when executed by a processor, may perform one or more steps of any method and / or any embodiment disclosed herein.

While the invention has been described with respect to a limited number of embodiments, those skilled in the art, having benefit of this disclosure, will appreciate that other embodiments can be devised which do not depart from the scope of the claims. Unless otherwise stated, various aspects and features of the embodiments described herein may be practiced separately or combined together. Accordingly, the scope of the invention should be limited only by the attached claims.

## Claims

1. A system, comprising:
a storage array (108) comprising a plurality of N+M storage devices (SDs) (110A-110B); and
a storage controller (104) operatively connected to the storage array and configured to:
maintain, for each data block in the storage array, a data block status which indicates whether the data block is a live data block or a dead data block;
maintain, for each Redundant Array of Independent Disks, RAID, stripe in the storage array, a RAID stripe status which indicates whether the RAID stripe is a live RAID stripe or a dead RAID stripe, wherein a RAID stripe is a live RAID stripe if it includes at least one live data block;
identify a target SD to remove, wherein the target SD is one of the plurality of SDs; and
after identifying the target SD, receive (600) a request to write data to the storage array;
in response to the request, write (608) a Redundant Array of Independent Disks (RAID) stripe that consists of N-1 data blocks and M parity blocks to the storage array, wherein none of the N-1 data blocks is stored on the target SD and none of the M parity blocks is stored on the target SD;
perform (506) a modified garbage collection operation for each RAID stripe in the storage array at the time the modified garbage collection operation is initiated, wherein the modified garbage collection operation comprises: i) identifying a live RAID stripe in the storage array, wherein the live RAID stripe comprises second data and consists of N second data blocks and M second parity blocks; and ii) writing (720) a new RAID stripe to a new location in the storage array wherein the new RAID stripe consists of N-1 third data blocks and M third parity blocks, wherein at least one of the N-1 third data blocks comprises a copy of data in at least one of the N second data blocks, wherein, during the modified garbage collection operation, data is read from, at least, the target SD and stored in, at least, the new RAID stripe which excludes the target SD; and
issue (508) a removal notification when the modified garbage collection operation is completed, wherein the removal notification indicates that the target SD may be removed from the storage array.

2. The system of claim 1, wherein the target SD is identified based on at least one item selected from a group consisting of an input from a user, a SD service schedule, the target SD exceeding an error event threshold.

3. The system of claim 1, wherein each of the plurality of SDs comprises NAND flash.

4. The system of claim 1, wherein the storage controller is configured to track RAID stripe geometry for each of the plurality of live RAID stripes, wherein the RAID stripe geometry for each of the plurality of live RAID stripes is used to perform the modified garbage collection operation.

5. The system of claim 1, wherein N >2.

6. The system of claim 1, wherein M=1.

7. The system of claim 1, wherein M>1.

8. A non-transitory computer readable medium comprising instructions, which when executed by the system of claim 1 perform a method, the method comprising: maintaining, for each data block in the storage array, a data block status which indicates whether the data block is a live data block or a dead data block; maintaining, for each RAID stripe in the storage array, a RAID stripe status which indicates whether the RAID stripe is a live RAID stripe or a dead RAID stripe wherein a RAID stripe is a live RAID stripe if it includes at least one live data block; and receiving (500) a service notification specifying a target storage device (SD), the method further comprising, after receiving the service notification:
receiving (600) a request to write data to the storage array, wherein the storage array comprises the target SD;
in response to the request, writing (608) a Redundant Array of Independent Disks (RAID) stripe to the storage array, wherein the RAID stripe comprises first data blocks and a first parity block, wherein at least one of the first data blocks comprises a portion of the data, wherein the first parity block comprises a first parity value calculated using the first data blocks, and wherein the first parity block is not stored on the target SD and wherein none of the first data blocks is stored on the target SD;
performing (506) a modified garbage collection operation for each RAID stripe in the storage array at the time the modified garbage collection operation is initiated, wherein the modified garbage collection operation comprises: i) identifying a live RAID stripe in the storage array, wherein the live RAID stripe comprises N second data blocks and a second parity block, wherein at least a portion of the live RAID stripe is located on the target SD; and ii) writing (720) a new RAID stripe to a new location in the storage array, wherein the new RAID stripe comprises N-1 third data blocks, wherein at least one of the N-1 third data blocks comprises a copy of data in at least one of the second data blocks, wherein the new RAID stripe comprises a third parity block, wherein the third parity block comprises a second parity value calculated using the N-1 third data blocks, wherein the third parity block is not stored on the target SD, and none of the N-1 third data blocks is stored on the target SD, wherein, during the modified garbage collection operation, data is read from, at least, the target SD and stored in, at least, the new RAID stripe which excludes the target SD; and
issuing (508) a removal notification when the modified garbage collection operation is completed, wherein the removal notification indicates that the target SD may be removed from the persistent storage.

9. The non-transitory computer readable medium of claim 8, further comprising:
after a new SD is added to the storage array to replace the target SD:
receiving a second request to write second data to the storage array; and
in response to the second request, writing a second RAID stripe to the storage array wherein the second RAID stripe comprises N fourth data blocks and a fourth parity block, wherein at least one of the N fourth data blocks comprises a portion of the second data, wherein the fourth parity block comprises a fourth parity value calculated using the N fourth data blocks, and wherein at least one of the fourth parity block and the N fourth data blocks is stored on the new SD.

10. The non-transitory computer readable medium of claim 8, wherein a RAID stripe geometry of the RAID stripe specifies that the second parity block is located on the target SD.

11. The non-transitory computer readable medium of claim 8, wherein a RAID stripe geometry of the RAID stripe specifies that one of the second data blocks is located on the target SD.

12. The non-transitory computer readable medium of claim 8, wherein the storage array comprises at least N+2 SDs, wherein the target SD is one of the at least N+2 SDs.

13. The non-transitory computer readable medium of claim 12, wherein the identified live RAID stripe comprises a first P parity value and a first Q parity value, wherein the new RAID stripe comprises a second P parity value and a second Q parity value.

14. The non-transitory computer readable medium of claim 8, wherein the target SD is a solid state memory device.

15. The non-transitory computer readable medium of claim 8, wherein all live RAID stripes were stored in the storage array prior to the service notification, and wherein the identified live RAID stripe is one of the live RAID stripes.

## Patentansprüche

1. System, das Folgendes umfasst:
ein Speicher-Array (108), das mehrere N+M Speichergeräte (SDs) (110A-110B) umfasst; und
einen Speicher-Controller (104), der mit dem Speicher-Array operativ verbunden und konfiguriert ist zum:
Führen, für jeden Datenblock in dem Speicher-Array, eines Datenblockstatus, der anzeigt, ob der Datenblock ein aktiver Datenblock oder ein toter Datenblock ist;
Führen, für jedes RAID-(Redundant Array of Independent Disks)-Stripe in dem Speicher-Array, eines RAID-Stripe-Status, der anzeigt, ob das RAID-Stripe ein aktives RAID-Stripe oder ein totes RAID-Stripe ist, wobei ein RAID-Stripe ein aktives RAID-Stripe ist, wenn es mindestens einen aktiven Datenblock enthält;
Identifizieren eines zu entfernenden Ziel-SD, wobei das Ziel-SD eines der mehreren SDs ist; und
Empfangen (600), nach dem Identifizieren des Ziel-SD, einer Anforderung zum Schreiben von Daten in das Speicher-Array;
Schreiben (608), als Reaktion auf die Anforderung, eines RAID-(Redundant Array of Independent Disks)-Stripe, das aus N-1 Datenblöcken und M Paritätsblöcken besteht, in das Speicher-Array, wobei keiner der N-1 Datenblöcke auf dem Ziel-SD gespeichert ist und keiner der M Paritätsblöcke auf dem Ziel-SD gespeichert ist;
Durchführen (506) einer modifizierten Garbage-Collection-Operation für jedes RAID-Stripe in dem Speicher-Array zu dem Zeitpunkt, zu dem die modifizierte Garbage-Collection-Operation initiiert wird, wobei die modifizierte Garbage-Collection-Operation Folgendes beinhaltet: i) Identifizieren eines aktiven RAID-Stripe in dem Speicher-Array, wobei das aktive RAID-Stripe zweite Daten umfasst und aus N zweiten Datenblöcken und M zweiten Paritätsblöcken besteht; und ii) Schreiben (720) eines neuen RAID-Stripe auf eine neue Position in dem Speicher-Array, wobei das neue RAID-Stripe aus N-1 dritten Datenblöcken und M dritten Paritätsblöcken besteht, wobei mindestens einer der N-l dritten Datenblöcke eine Kopie von Daten in mindestens einem der N zweiten Datenblöcke umfasst, wobei während der modifizierten Garbage-Collection-Operation Daten von mindestens dem Ziel-SD gelesen und in mindestens dem neuen RAID-Stripe gespeichert werden, der das Ziel-SD ausschließt; und
Ausgeben (508) einer Entfernungsbenachrichtigung, wenn die modifizierte Garbage-Collection-Operation abgeschlossen ist, wobei die Entfernungsbenachrichtigung anzeigt, dass das Ziel-SD aus dem Speicher-Array entfernt werden kann.

2. System nach Anspruch 1, wobei das Ziel-SD auf der Basis von mindestens einem Element ausgewählt aus einer Gruppe bestehend aus einer Eingabe von einem Benutzer, einem SD-Serviceplan und dem Überschreiten einer Fehlerereignisschwelle durch das Ziel-SD identifiziert wird.

3. System nach Anspruch 1, wobei jedes der mehreren SDs NAND-Flash umfasst.

4. System nach Anspruch 1, wobei der Speicher-Controller zum Verfolgen der RAID-Stripe-Geometrie für jeden der mehreren aktiven RAID-Stripes konfiguriert ist, wobei die RAID-Stripe-Geometrie für jeden der mehreren aktiven RAID-Stripes verwend+t wird, um die modifizierte Garbage-Collection-Operation durchzuführen.

5. System nach Anspruch 1, wobei N>2 ist.

6. System nach Anspruch 1, wobei M=1 ist.

7. System nach Anspruch 1, wobei M>1 ist.

8. Nichtflüchtiges computerlesbares Medium, das Befehle umfasst, die bei Ausführung durch das System nach Anspruch 1 ein Verfahren durchführen, wobei das Verfahren Folgendes beinhaltet: Führen, für jeden Datenblock in dem Speicher-Array, eines Datenblockstatus, der anzeigt, ob der Datenblock ein aktiver Datenblock oder ein toter Datenblock ist; Führen, für jedes RAID-Stripe in dem Speicher-Array, eines RAID-Stripe-Status, der anzeigt, ob das RAID-Stripe ein aktives RAID-Stripe oder ein totes RAID-Stripe ist, wobei ein RAID-Stripe ein aktives RAID-Stripe ist, wenn es mindestens einen aktiven Datenblock enthält; und Empfangen (500) einer Service-Benachrichtigung, die ein Zielspeichergerät (SD) spezifiziert, wobei das Verfahren nach dem Empfangen der Service-Benachrichtigung ferner Folgendes beinhaltet:
Empfangen (600) einer Anforderung zum Schreiben von Daten auf das Speicher-Array, wobei das Speicher-Array das Ziel-SD umfasst;
Schreiben (608), als Reaktion auf die Anforderung, eines RAID-(Redundant Array of Independent Disks)-Stripe auf das Speicher-Array, wobei das RAID-Stripe erste Datenblöcke und einen ersten Paritätsblock umfasst, wobei mindestens einer der ersten Datenblöcke einen Teil der Daten umfasst, wobei der erste Paritätsblock einen ersten Paritätswert umfasst, der anhand der ersten Datenblöcke berechnet wird, und wobei der erste Paritätsblock nicht auf dem Ziel-SD gespeichert ist und wobei keiner der ersten Datenblöcke auf dem Ziel-SD gespeichert ist;
Durchführen (506) einer modifizierten Garbage-Collection-Operation für jedes RAID-Stripe in dem Speicher-Array zu dem Zeitpunkt, zu dem die modifizierte Garbage-Collection-Operation initiiert wird, wobei die modifizierte Garbage-Collection-Operation Folgendes beinhaltet: i) Identifizieren eines aktiven RAID-Stripe in dem Speicherarray, wobei das aktive RAID-Stripe N zweite Datenblöcke und einen zweiten Paritätsblock umfasst, wobei sich mindestens ein Teil des aktiven RAID-Stripe auf dem Ziel-SD befindet; und ii) Schreiben (720) eines neuen RAID-Stripe an eine neue Position in dem Speicher-Array, wobei das neue RAID-Stripe N-l dritte Datenblöcke umfasst, wobei mindestens einer der N-l dritten Datenblöcke eine Kopie von Daten in mindestens einem der zweiten Datenblöcke umfasst, wobei das neue RAID-Stripe einen dritten Paritätsblock umfasst, wobei der dritte Paritätsblock einen zweiten Paritätswert umfasst, der anhand der N-l dritten Datenblöcke berechnet wird, wobei der dritte Paritätsblock nicht auf dem Ziel-SD gespeichert ist und keiner der N-l dritten Datenblöcke auf dem Ziel-SD gespeichert ist, wobei während der modifizierten Garbage-Collection-Operation Daten von wenigstens dem Ziel-SD gelesen und in zumindest dem neuen RAID-Stripe gespeichert werden, das das Ziel-SD ausschließt; und
Ausgeben (508) einer Entfernungsbenachrichtigung, wenn die modifizierte Garbage-Collection-Operation abgeschlossen ist, wobei die Entfernungsbenachrichtigung anzeigt, dass das Ziel-SD aus dem persistenten Speicher entfernt werden kann.

9. Nichtflüchtiges computerlesbares Medium nach Anspruch 8, das ferner Folgendes umfasst:
nach dem Hinzufügen eines neuen SD zu dem Speicher-Array, um das Ziel-SD zu ersetzen:
Empfangen einer zweiten Anforderung zum Schreiben von zweiten Daten auf das Speicher-Array; und
Schreiben, als Reaktion auf die zweite Anforderung, eines zweiten RAID-Stripe auf das Speicher-Array, wobei das zweite RAID-Stripe N vierte Datenblöcke und einen vierten Paritätsblock umfasst, wobei mindestens einer der N vierten Datenblöcke einen Teil der zweiten Daten umfasst, wobei der vierte Paritätsblock einen vierten Paritätswert umfasst, der anhand der N vierten Datenblöcke berechnet wird, und wobei mindestens einer aus dem vierten Paritätsblock und den N vierten Datenblöcken auf dem neuen SD gespeichert wird.

10. Nichtflüchtiges computerlesbares Medium nach Anspruch 8, wobei eine RAID-Stripe-Geometrie des RAID-Stripe angibt, dass sich der zweite Paritätsblock auf dem Ziel-SD befindet.

11. Nichtflüchtiges computerlesbares Medium nach Anspruch 8, wobei eine RAID-Stripe-Geometrie des RAID-Stripe angibt, dass sich einer der zweiten Datenblöcke auf dem Ziel-SD befindet.

12. Nichtflüchtiges computerlesbares Medium nach Anspruch 8, wobei das Speicher-Array mindestens N+2 SDs umfasst, wobei das Ziel-SD eines der mindestens N+2 SDs ist.

13. Nichtflüchtiges computerlesbares Medium nach Anspruch 12, wobei das identifizierte aktive RAID-Stripe einen ersten P-Paritätswert und einen ersten Q-Paritätswert umfasst, wobei das neue RAID-Stripe einen zweiten P-Paritätswert und einen zweiten Q-Paritätswert umfasst.

14. Nichtflüchtiges computerlesbares Medium nach Anspruch 8, wobei das Ziel-SD ein Festkörperspeichergerät ist.

15. Nichtflüchtiges computerlesbares Medium nach Anspruch 8, wobei alle aktiven RAID-Stripes vor der Servicemeldung in dem Speicher-Array gespeichert wurden und wobei das identifizierte aktive RAID-Stripe eines der aktiven RAID-Stripes ist.

## Revendications

1. Système comprenant :
une matrice de stockage (108) comprenant une pluralité de N+M dispositifs de stockage (SD) (110A-110B) ; et
un contrôleur de stockage (104) connecté de manière opérationnelle à la matrice de stockage et configuré pour :
tenir à jour, pour chaque bloc de données de la matrice de stockage, un état de bloc de données qui indique que le bloc de données est un bloc de données actif ou un bloc de données inactif ;
tenir à jour, pour chaque bande de réseau redondant de disques indépendants, RAID, dans la matrice de stockage, un état de bande RAID qui indique que la bande RAID est une bande RAID active ou une bande RAID inactive, une bande RAID étant une bande RAID active si elle comprend au moins un bloc de données actif ;
identifier un SD cible à supprimer, le DD cible étant l'un de la pluralité de SD ; et
après l'identification du SD cible, recevoir (600) une demande d'écriture de données dans la matrice de stockage ;
en réponse à la demande, écrire (608) une bande de réseau redondant de disques indépendants (RAID) composée de N-1 blocs de données et de M blocs de parité M dans la matrice de stockage, dans lequel aucun des N-1 blocs de données n'est stocké sur le SD cible et aucun des M blocs de parité n'est stocké sur le SD cible ;
réaliser (506) une opération de récupération de place modifiée pour chaque bande RAID de la matrice de stockage au moment où l'opération de récupération de place modifiée est lancée, l'opération de récupération de place modifiée comprenant : i) l'identification d'une bande RAID active dans la matrice de stockage, la bande RAID active comprenant des deuxièmes données et consistant en N deuxièmes blocs de données et M deuxièmes blocs de parité ; et ii) l'écriture (720) d'une nouvelle bande RAID dans un nouvel emplacement de la matrice de stockage, la nouvelle bande RAID consistant en N-1 troisièmes blocs de données et M troisièmes blocs de parité, au moins un des N-1 troisièmes blocs de données comprenant une copie des données dans au moins un des N deuxièmes blocs de données, dans lequel, au cours de l'opération de récupération de place modifiée, les données sont lues à partir, au moins, du SD cible et stockées dans, au moins, la nouvelle bande RAID qui exclut le SD cible ; et
émettre (508) une notification de suppression lorsque l'opération de récupération de place modifiée est terminée, la notification de suppression indiquant que le SD cible peut être supprimé de la matrice de stockage.

2. Système selon la revendication l, dans lequel le SD cible est identifié sur la base d'au moins un élément sélectionné dans un groupe consistant en une entrée d'un utilisateur, un calendrier de service de SD, le dépassement par le SD d'un seuil d'événement d'erreur.

3. Système selon la revendication l, dans lequel chacun de la pluralité de SD comprend une mémoire flash NAND

4. Système selon la revendication l, dans lequel le contrôleur de stockage est configuré pour suivre la géométrie de bande RAID de chacune de la pluralité de bandes RAID actives, la géométrie de bande RAID de chacune de la pluralité de bandes RAID actives servant à réaliser l'opération de récupération de place modifiée.

5. Système selon la revendication 1, dans lequel N >2.

6. Système selon la revendication 1, dans lequel M=1.

7. Système selon la revendication 1, dans lequel M>1.

8. Support non transitoire lisible par ordinateur comprenant des instructions qui, à leur exécution par le système selon la revendication 1, réalisent une procédé, le procédé comprenant : la tenue à jour, pour chaque bloc de données dans la matrice de stockage, d'un état de bloc de données qui indique que le bloc de données est un bloc de données actif ou un bloc de données inactif ; la tenue à jour, pour chaque bande RAID dans la matrice de stockage, d'un état de bande RAID qui indique que la bande RAID est une bande RAID active ou une bande RAID inactive, une bande RAID étant une bande RAID active si elle comprend au moins un bloc de données actif ; et la réception (500) d'une notification de service spécifiant un dispositif de stockage (SD) cible, le procédé comprenant en outre, après la réception de la notification de service :
la réception (600) d'une demande d'écriture de données dans la matrice de stockage, la matrice de stockage comprenant le SD cible ;
en réponse à la demande, l'écriture (608) d'une bande de réseau redondant de disques indépendants (RAID) dans la matrice de stockage, dans lequel la bande RAID comprend des premiers blocs de données et un premier bloc de parité, au moins des premiers blocs de données comprend une partie des données, le premier bloc de parité comprend une première valeur de parité calculée à l'aide des premiers blocs de données, et le premier bloc de parité n'est pas stocké sur le SD cible et aucun des premiers blocs de parité n'est stocké sur le SD cible ;
la réalisation (506) d'une opération de récupération de place modifiée pour chaque bande RAID dans la matrice de stockage au moment où l'opération de récupération de place modifiée est lancée, l'opération de récupération de place modifiée comprenant : i) l'identification d'une bande RAID active dans la matrice de stockage, la bande RAID active comprenant N deuxièmes blocs de données et un deuxième bloc de parité, au moins une partie de la bande RAID active étant située sur le SD cible ; et ii) l'écriture (720) d'une nouvelle bande RAID dans un nouvel emplacement dans la matrice de stockage, dans lequel la nouvelle bande RAID comprend N-1 troisièmes blocs de données, au moins un des N-1 troisièmes blocs de données comprend une copie de données dans au moins un des deuxièmes blocs de données, la nouvelle bande RAID comprend un troisième bloc de parité, le troisième bloc de parité comprend une seconde valeur de parité calculée à l'aide des N-1 troisièmes blocs de données, le troisième bloc de parité n'est pas stocké sur le SD cible, et aucun des N-1 troisièmes blocs de données n'est stocké sur le SD cible, dans lequel, durant l'opération de récupération de place modifiée, des données sont lues à partir, au moins, du SD cible et stockées dans, au moins, la nouvelle bande RAID qui exclut le SD cible ; et
l'émission (508) d'une notification de suppression lorsque l'opération de récupération de place modifiée est terminée, la notification de suppression indiquant que le SD cible peut être supprimé de la mémoire permanente.

9. Support non transitoire lisible par ordinateur selon la revendication 8, comprenant en outre :
après l'ajout d'une nouvelle carte SD à la matrice de stockage pour remplacer la carte SD cible :
la réception d'une deuxième demande d'écriture de deuxièmes données dans la matrice de stockage ; et
en réponse à la deuxième demande, l'écriture d'une deuxième bande RAID dans la matrice de stockage, dans lequel la deuxième bande RAID comprend N quatrième blocs de données et un quatrième bloc de parité, au moins un des N quatrième blocs de données comprend une partie des deuxièmes données, le quatrième bloc de parité comprend une quatrième valeur de parité calculée à l'aide des N quatrième blocs de données, et au moins un des quatrièmes blocs de parité et des N quatrième blocs de données est stocké sur le nouveau SD.

10. Support non transitoire lisible par ordinateur selon la revendication 8, dans lequel une géométrie de bande RAID de la bande RAID spécifie que le deuxième bloc de parité est situé sur le SD cible.

11. Support non transitoire lisible par ordinateur selon la revendication 8, dans lequel une géométrie de bande RAID de la bande RAID spécifie que l'un des deuxièmes blocs de données est situé sur le SD cible.

12. Support lisible par ordinateur non transitoire selon la revendication 8, dans lequel la matrice de stockage comprend au moins N+2 SDS, le SD cible étant l'un des au moins N+2 SD.

13. Support non transitoire lisible par ordinateur selon la revendication 12, dans lequel la bande RAID active identifiée comprend une première valeur de parité P et une première valeur de parité Q, la nouvelle bande RAID comprend une deuxième valeur de parité P et une deuxième valeur de parité Q.

14. Support lisible par ordinateur non transitoire selon la revendication 8, dans lequel le SD cible est un dispositif de mémoire à semi-conducteurs.

15. Support lisible par ordinateur non transitoire selon la revendication 8, dans lequel toutes les bandes RAID actives sont stockées dans la matrice de stockage avant la notification de service, et dans lequel la bande RAID active identifiée est l'une des bandes RAID actives.
